# EUROPÄISCHE PATENTANMELDUNG

(11) **EP 4 641 827 A1**
(43) Veröffentlichungstag der Anmeldung: **29.10.2025**
(21) Anmeldenummer: 24172273.5
(22) Anmeldetag: 24.04.2024
(51) Int. Cl.: H01Q 1/22, H01Q 13/02, H01Q 19/08

(54) **VERFAHREN ZUM HERSTELLEN EINER FÜLLUNG FÜR EINE HORNANTENNE, HORNANTENNE FÜR EIN RADARMESSGERÄT UND RADARMESSGERÄT**

(71) Anmelder: VEGA Grieshaber KG, 77709 Wolfach (DE)
(72) Erfinder: Falk, Johannes, 78112 St.Georgen (DE); Kienzle, Klaus, 77736 Zell am Harmersbach (DE); Lenk, Fritz, 77761 Schiltach (DE)
(74) Vertreter: Patentanwälte Bauer Vorberg Kayser

(57) **Zusammenfassung**

Die Erfindung betrifft ein Verfahren (20) zum Herstellen einer Füllung (7) für eine Hornantenne (1) für ein Radarmessgerät, eine Hornantenne (1) für ein Radarmessgerät und ein Radarmessgerät mit einer Hornantenne (1). Die weist Füllung (7) zumindest eine erste Materialzusammensetzung und eine von der ersten Materialzusammensetzung unterschiedliche zweite Materialzusammensetzung auf. Zumindest die erste Materialzusammensetzung wird zur Ausbildung eines ersten Abschnitts (71) einer Rohfüllung bereitgestellt. Zumindest die zweite Materialzusammensetzung wird zur Ausbildung zumindest eines zweiten Abschnitts (72) der Rohfüllung bereitgestellt. Der zweite Abschnitt (72) unterscheidet sich von dem ersten Abschnitt (71). Die Abschnitte (71, 72) der Rohfüllung werden gepresst oder gesintert.

## Beschreibung

Die Erfindung betrifft ein Verfahren zum Herstellen einer Füllung für eine Hornantenne für ein Radarmessgerät, eine Hornantenne für ein Radarmessgerät und ein Radarmessgerät mit einer Hornantenne.

Aus dem Stand der Technik sind Radarmessgeräte, beispielsweise Radar-Füllstandmessgeräte bekannt, die nach dem Laufzeitprinzip einen Füllstand eines in einem Behälter befindlichen Füllguts, insbesondere von Flüssigkeiten und Schüttgütern detektieren. Solche Radar-Füllstandmessgeräte weisen beispielsweise Hornantennen auf, über die ein eingekoppeltes HF-Signal in Richtung des Füllgutes abgestrahlt und von diesem reflektiert wird. In einem kombinierten Sende- und Empfangssystem des Radar-Füllstandmessgerätes, das mit der Hornantenne gekoppelt ist, werden die vom Füllgut reflektierten Mikrowellenimpulse erfasst und ausgewertet. Durch Laufzeitermittlung kann auf den Füllstand des Füllguts geschlossen werden.

Hornantennen haben grundsätzlich einen einfachen und robusten Aufbau, einen sehr guten Wirkungsgrad und sind kostengünstig herzustellen. Für spezifische Anwendungsfälle, beispielsweise Unterdruck- oder Überdruckumgebungen, existieren Hornantennen, bei denen das Antennenhorn vollständig mit einem festen Medium gefüllt ist, z.B. einem Kunststoff. Bei derartigen gefüllten Hornantennen wird es jedoch als nachteilig empfunden, dass die zur Füllung verwendeten Kunststoffe häufig unzureichende dielektrische Eigenschaften aufweisen und zudem nicht ausreichend geeignet sind, aggressiven Messumgebungen hinreichend zu widerstehen oder in hygienekritischen Anwendungen, bei denen Reinigungsvorgänge mit hohen Temperaturen vorgesehen sind, eingesetzt zu werden.

Bisherige Ansätze, wie in der EP 3 168 580 A1, wenden sich daher Hornantennen zu, die Füllungen aufweisen, welche mehrere Abschnitte mit zumindest teilweise unterschiedlichen Materialien umfassen. Dadurch können die einzelnen Abschnitte der Füllungen unterschiedliche Eigenschaften aufweisen, je nach den jeweiligen Bedürfnissen. Beispielsweise kann ein spezifischer Kunststoff im Bereich der Abstrahlfläche der Hornantenne gewählt werden, damit die Signalcharakteristik verbessert wird. Ein anderer Abschnitt wiederum kann eine besonders hohe mechanische Stabilität aufweisen, damit die Hornantenne im Bereich dieses Abschnitts mechanisch befestigt werden kann.

Die mehreren Abschnitte sind jedoch separat hergestellt. Dadurch ist der Herstellungsaufwand hoch, da die Grenzflächen der Abschnitte aufwendig bearbeitet werden müssen, um eine spaltfreie Fügung zu ermöglichen. Luftspalte zwischen den Grenzflächen würden anderenfalls Signalreflexionen verursachen, welche das zu sendende oder zu empfangende Signal deutlich stören und somit insbesondere das Antennenklingeln im Nahbereich erhöhen können und dadurch die Messicherheit reduzieren.

Selbst wenn ein Spalt zwischen den Grenzflächen vermieden werden kann, so liegt zwischen den Abschnitten aufgrund der separaten Herstellung der Abschnitte zumindest eine einzelne Grenzfläche vor. An Grenzflächen treten jedoch ebenfalls Signalreflexionen auf, wodurch die Qualität der Signalübertragung der Hornantenne reduziert ist und deshalb die Messgenauigkeit herabgesetzt ist.

Es besteht daher ein Bedürfnis dafür, die Nachteile der bekannten Füllungen für Hornantennen zu vermeiden oder zumindest zu reduzieren. Insbesondere soll eine Füllung für eine Hornantenne und ein entsprechendes Herstellungsverfahren geschaffen werden, die gewünschte Eigenschaften ermöglichen und dennoch eine hohe Signaltransmissionsqualität gewährleistet.

Die Aufgabe wird durch die Gegenstände der unabhängigen Patentansprüche gelöst. Vorteilhafte Ausgestaltungen sind in den abhängigen Patentansprüchen und der nachfolgenden Beschreibung angegeben, von denen jeder für sich oder in (Sub-)Kombination Aspekte der Offenbarung darstellen kann. Einige Merkmale werden im Hinblick auf Verfahren erläutert, andere im Hinblick auf Vorrichtungen. Die Aspekte sind aber jeweils wechselseitig zu übertragen.

Gemäß einem Aspekt betrifft die Erfindung ein Verfahren zum Herstellen einer Füllung für eine Hornantenne für ein Radarmessgerät. Die Füllung weist zumindest eine erste Materialzusammensetzung und eine von der ersten Materialzusammensetzung unterschiedliche zweite Materialzusammensetzung auf. Das Verfahren umfasst zumindest die Schritte:
- Zumindest die erste Materialzusammensetzung wird zur Ausbildung eines ersten Abschnitts einer Rohfüllung bereitgestellt.
- Zumindest die zweite Materialzusammensetzung wird zur Ausbildung zumindest eines zweiten Abschnitts der Rohfüllung bereitgestellt. Der zweite Abschnitt unterscheidet sich von dem ersten Abschnitt.
- Die Abschnitte der Rohfüllung werden gepresst oder gesintert.

Die Erfindung basiert auf der Erkenntnis, dass durch Pressen oder Sintern einstückige Füllungen für Hornantennen hergestellt werden können. Das Verfahren ermöglicht es, sanfte Übergänge zwischen unterschiedlichen Abschnitten der Füllung vorzusehen. Als Folge können Grenzflächen innerhalb der Füllung vermieden werden. Dadurch können Signalreflexionen verhindert werden. Deshalb ist die Qualität der Signaltransmission durch die Füllung der Hornantenne. Beispielsweise treten weniger Störungen und Signalverluste auf. Zusätzlich ist der Herstellungsaufwand der Füllung gegenüber bisherigen Ansätzen reduziert, da durch die Art der Herstellung Spalte zwischen den Abschnitten, beispielsweise Luftspalte, ohne aufwändige Bearbeitung vermieden werden können. Zusätzlich können die Abschnitte gewünschte Eigenschaften aufweisen, um beispielsweise besonders ausgestaltete Strahlcharakteristiken oder eine hohe mechanische Stabilität in einem bestimmten Abschnitt zu verwirklichen.

Optional bildet die Rohfüllung bereits die fertiggestellte Füllung für die Hornantenne aus. Dann ist keine weitere Bearbeitung der Rohfüllung notwendig.

In einigen Ausführungsformen umfasst das Verfahren zusätzlich den Schritt:
- Wärmebehandeln der Rohfüllung.

Durch die Wärmebehandlung kann die Rohfüllung beispielsweise in eine mechanisch stabile und belastbare Form gebracht werden, sodass die Struktur der Rohfüllung im Anschluss an die Wärmebehandlung permanent ist.

Bevorzugt ist eine Materialkonzentration eines ersten Materials im ersten Abschnitt größer als ein vorbestimmter erster Schwellenwert.

Alternativ oder kumulativ ist eine Materialkonzentration eines zweiten Materials im zweiten Abschnitt größer als ein vorbestimmter zweiter Schwellenwert.

Das bedeutet, dass die Abschnitte unterschiedliche Materialkonzentrationen der unterschiedlichen Materialien aufweisen können, damit unterschiedliche Eigenschaften der Abschnitte gewährleistet werden.

Der erste Schwellenwert und/oder der zweite Schwellenwert können beispielsweise 50% sein, bevorzugt 70%, weiter bevorzugt 85%, weiter bevorzugt 95%, weiter bevorzugt 99%.

In einigen Ausführungsformen kann die Materialkonzentration des ersten Materials im ersten Abschnitt und/oder die Materialkonzentration des zweiten Materials im zweiten Abschnitt derart hoch sein, dass andere als die jeweiligen Materialien in den jeweiligen Abschnitten nicht nachweisbar sind. Das bedeutet, dass der erste Abschnitt beispielsweise im Wesentlichen aus dem ersten Material gebildet sein kann. Obwohl das zweite Material in der Rohfüllung vorhanden ist, beispielsweise im zweiten Abschnitt, ist die Materialkonzentration des ersten Materials in dem ersten Abschnitt derart hoch, dass das zweite Material in dem ersten Abschnitt nicht nachweisbar ist.

Optional umfasst das Verfahren zusätzlich den Schritt:
- Mechanisches Bearbeiten der Rohfüllung, um die Füllung der Hornantenne zu erhalten.

Dadurch kann die Rohfüllung beispielsweise einer gewünschten Form entsprechend bearbeitet werden, damit die derart bearbeitete Rohfüllung als Füllung der Hornantenne genutzt werden kann. Beispielsweise kann die Hornantenne einen Außenmantel, beispielsweise eine Gummierung oder einen Kunststoffmantel, aufweisen, an dessen Innenvolumens die Rohfüllung angepasst wird. Zusätzlich kann die mechanische Bearbeitung auch genutzt werden, um Anformungen oder Konturen zu erzeugen.

Bevorzugt ist die Rohfüllung einstückig. Dadurch können Grenzflächen innerhalb der Rohfüllung gänzlich vermieden werden. Als Folge kann eine hohe Signaltransmissionsqualität gewährleistet werden, also weniger Störungen und Einflüsse auf das geleitete Signal.

Optional ist ein Übergang einer lokalen Materialzusammensetzung zwischen dem ersten Abschnitt und dem zweiten Abschnitt fließend. Unter der lokalen Materialzusammensetzung wird diejenige Materialzusammensetzung verstanden, die im Übergangsbereich zwischen dem ersten und dem zweiten Abschnitt vorliegt. Das bedeutet, dass sich die Materialzusammensetzung nicht plötzlich, abrupt ändert, sondern sich in kontinuierlicher Weise zwischen den unterschiedlichen Materialzusammensetzungen ändert. Dadurch wird die Homogenität des Materialübergangs erhöht.

In einigen Ausführungsformen umfasst das Verfahren zusätzlich den Schritt:
- Bereitstellen zumindest der ersten Materialzusammensetzung und/oder der zweiten Materialzusammensetzung und/oder einer dritten Materialzusammensetzung, die sich von der ersten Materialzusammensetzung und der zweiten Materialzusammensetzung unterscheidet, zur Ausbildung zumindest eines dritten Abschnitts der Rohfüllung.

Dadurch ist die Variabilität der Rohfüllung erhöht, da die Rohfüllung auch mehr als zwei Abschnitte und mehr als zwei Materialzusammensetzungen aufweisen kann. Beispielsweise kann ein dritter Abschnitt als Übergangsabschnitt zwischen dem ersten Abschnitt und dem zweiten Abschnitt angeordnet sein. Der dritte Abschnitt kann dann insbesondere einen sanften Materialübergang zwischen dem ersten Abschnitt und dem zweiten Abschnitt gewährleisten. Dadurch können Störungen auf das geleitete Signal reduziert werden und die mechanische Stabilität erhöht werden.

Natürlich können auch mehr als drei Abschnitte ausgebildet werden.

Bevorzugt sind Übergange einer lokalen Materialzusammensetzung zwischen dem ersten Abschnitt, dem zweiten Abschnitt und dem dritten Abschnitt fließend. Unter der lokalen Materialzusammensetzung wird diejenige Materialzusammensetzung verstanden, die im Übergangsbereich zwischen Paaren von dem ersten, dem zweiten und dem dritten Abschnitt oder in einem Übergangsbereich zwischen allen dreien Abschnitten vorliegt. Das bedeutet, dass sich die Materialzusammensetzung nicht plötzlich, abrupt ändert, sondern sich in kontinuierlicher Weise zwischen den unterschiedlichen Materialzusammensetzungen ändert. Dadurch wird die Homogenität der Materialübergänge erhöht.

Optional können die Materialzusammensetzungen ein oder mehrere Materialien aufweisen. Insofern wird vorliegend auch eine Materialzusammensetzung, die lediglich ein einzelnes Material aufweist, als Materialzusammensetzung bezeichnet. Bevorzugt können Materialzusammensetzungen aber auch zwei, drei oder mehr Materialien aufweisen. Dadurch ist die Variabilität der Rohfüllung weiter erhöht, da die Eigenschaften der Füllung der Hornantenne bedarfsgerecht basierend auf den entsprechenden Materialien eingestellt werden können.

Durch eine derartige Ausgestaltung der Hornantenne mit einer wenigstens zwei Abschnitte umfassenden Füllung kann erreicht werden, dass der erste Abschnitt, der das Antennenhorn vorderseitig, also in Hauptabstrahlrichtung, verschließt, optimal auf die von außen auf die Antenne einwirkenden Umgebungsbedingungen angepasst sein kann, während der wenigstens eine zweite Abschnitt diese Randbedingungen nicht erfüllen muss.

Vorteilhafterweise ist das erste Material hinsichtlich seiner thermischen, mechanischen und/oder chemischen Eigenschaften optimiert. Auf diese Weise wird erreicht, dass beispielsweise eine hohe Über- und/oder Unterdruckfähigkeit, thermisch optimierte Eigenschaften und/oder eine erhöhte chemische Widerstandsfähigkeit gegen aggressive Medien zur Verfügung steht. Ferner können die mechanischen Eigenschaften auch einen thermischen Ausdehnungskoeffizienten betreffen, der beispielsweise an ein Material der Hornantenne, beispielsweise einen Außenmantel davon, angepasst sein kann. Auf diese Weise kann erreicht werden, dass sich ein Antennenhorn der Hornantenne und der erste zur Abdeckung und gegebenenfalls auch Abdichtung verwendete Abschnitt in gleichem Maße thermisch ausdehnen und zusammenziehen können. Als Folge wird die angestrebte Abdeckungs- und/oder Dichtwirkung durch thermische Einflüsse nicht gefährdet.

Zumindest eines des ersten und des zweiten Materials kann derart ausgewählt sein, dass es hinsichtlich seiner dielektrischen Eigenschaften, insbesondere im Hinblick auf eine Dämpfung im Hochfrequenzbereich, beispielsweise bei Frequenzen über 5 GHz, optimiert ist. Auf diese Weise kann eine Materialkombination erreicht werden, die sowohl mechanisch und/oder chemisch als auch dielektrisch sehr gute Eigenschaften aufweist.

Die erste Materialzusammensetzung und die zweite Materialzusammensetzung können beispielsweise in Pulverform bereitgestellt werden. Dadurch ist das Herstellungsverfahren besonders kompakt.

In einigen Ausführungsformen umfassen das erste Material und/oder das zweite Material zumindest zwei verschiedene von Polytetrafluorethylen (PTFE), Polyetheretherketon (PEEK), Polyetheretherketon CF 25 (PEEK CF25) und Polyetheretherketon CF 30 (PEEK CF30). Die Abkürzung CFX beschreibt dabei einen zusätzlichen Kohlenstoffanteil in PEEK.

PEEK zeigt beispielsweise eine hohe mechanische Stabilität. PTFE wiederum kann genutzt werden, um die Signalcharakteristik zu optimieren.

Bevorzugt weist der erste Abschnitt in Hauptabstrahlrichtung der Hornantenne eine freie Fläche mit konvexer Formgebung auf. Dadurch ist die freie Fläche beispielsweise als dielektrische Linse zur Strahlformung der Hornantenne ausgebildet.

Optional ist der erste Abschnitt linsenförmig oder kegelförmig ausgebildet. Dadurch kann eine konvexe Formgebung besonders einfach gewährleistet werden. Zusätzlich sind die Oberflächen von konvexen Strukturen auch einfach zu reinigen, wodurch der Wartungsaufwand für die Hornantenne reduziert ist.

Zur Erhöhung einer mechanischen Stabilität kann das Antennenhorn vorderseitig zusätzlich einen umlaufenden, sich im Wesentlichen senkrecht zur Hauptabstrahlrichtung erstreckenden Auflagerand aufweisen. An dem Auflagerand kann ferner ein sich im Wesentlichen in Hauptabstrahlrichtung erstreckender Kragen angeordnet sein, wobei das Antennenhorn, der Auflagerand und der Kragen bevorzugt einstückig ausgebildet sind. Hinsichtlich einer Über- und/oder Unterdruckstabilität der vorliegenden Hornantenne kann es vorteilhaft sein, wenn sich der erste Abschnitt der Füllung an dem Auflagerand abstützt und damit eine erhöhte Druckaufnahmefähigkeit in Axialrichtung aufweist. Der erste Abschnitt kann sich dabei beispielsweise ausgehend von dem Auflagerand in Hauptabstrahlrichtung erstrecken und rückseitig daran abgestützt sein.

Optional kann zumindest ein Abschnitt der Rohfüllung eingerichtet sein, um einen Kragen der Füllung des Antennenhorns auszubilden. Der Kragen kann eine sich in Radialrichtung nach innen erstreckende Klemmanordnung aufweisen. Die Klemmanordnung kann eine Mehrzahl von über den Umfang verteilten Klemmnasen oder einen umlaufenden Klemmrand umfassen. Dadurch kann die Montage des Antennenhorns vereinfacht werden.

In einigen Ausführungsformen kann zumindest einer der Abschnitte derart ausgebildet werden, dass er eine oder mehrere Anformungen aufweist. Die Anformungen können derart ausgebildet sein, dass sie über eine Außenkontur der umliegenden Bereiche des Abschnitts hinausstehen. Dadurch kann bei Einfügen der Füllung in das Antennenhorn ein Luftspalt ausbildbar sein, beispielsweise zwischen der Füllung (in Bereichen, die keine Anformungen aufweisen) und einer Hülle des Antennenhorns, beispielsweise einem Außenmantel davon. Dieser Luftspalt ist aus hochfrequenztechnischer Sicht vorteilhaft und ermöglicht außerdem, dass thermisch induzierte Ausdehnungen der Füllung in Radialrichtung möglich sind. Zusätzlich können die Anformungen eine Zentrierung der Füllung innerhalb des Antennenhorns gewährleisten.

Gemäß einem weiteren Aspekt betrifft die Erfindung eine Hornantenne für ein Radarmessgerät. Die Hornantenne weist eine Füllung auf, die nach dem Verfahren wie hierin zuvor beschrieben hergestellt ist. Der erste Abschnitt und der zweite Abschnitt sind entlang der Längserstreckungsrichtung der Hornantenne und/oder entlang der Radialrichtung der Hornantenne ausgebildet.

Da die Füllung einstückig ausgebildet ist, weist die Hornantenne eine hervorragende Signalcharakteristik auf, obwohl der Herstellungsaufwand niedrig ist.

Das bedeutet auch, dass der zweite Abschnitt den ersten Abschnitt in einigen Ausführungsformen zumindest teilweise umgeben kann. Dadurch kann der erste Abschnitt beispielsweise vor äußeren Einflüssen durch den zweiten Abschnitt geschützt werden.

Alternativ können der erste Abschnitt und der zweite Abschnitt nebeneinander entlang der Längserstreckungsrichtung der Hornantenne angeordnet sein.

Kombinationen der relativen Ausrichtungen des ersten Abschnitts und des zweiten Abschnitts sind ebenfalls denkbar, insbesondere wenn mehr als zwei Abschnitte innerhalb der Füllung ausgebildet sind.

Optional weist die Hornantenne ein in einer vorderseitigen Richtung strahlendes Antennenhorn und eine rückseitige Speiseeinrichtung auf. Die Füllung füllt die Hornantenne wenigstens teilweise aus und verschließt sie vorderseitig.

Bevorzugt füllt die Füllung das Antennenhorn der Hornantenne senkrecht zu einer Hauptabstrahlrichtung in Radialrichtung der Hornantenne wenigstens abschnittsweise vollständig aus.

Gemäß einem weiteren Aspekt betrifft die Erfindung ein Radarmessgerät mit einer Elektronik zur Erzeugung und Auswertung hochfrequenter Signale, einer Speiseeinrichtung zur Speisung einer Hornantenne mit den hochfrequenten Signalen. Die Hornantenne ist wie hierin zuvor beschrieben ausgebildet.

Die Vorteile, die anhand der Hornantenne erreicht werden, werden in entsprechender Weise auch durch das Radarmessgerät erzielt.

Das Radarmessgerät kann insbesondere ein Radar-Füllstandsmessgerät sein. Das Radar-Füllstandsmessgerät kann mit einer Auswerteeinheit gekoppelt sein oder diese umfassen. Die Auswerteeinheit ist eingerichtet, basierend auf einer Laufzeitauswertung von Signalen, die von der Hornantenne ausgesandt und in der Folge empfangen werden, einen Füllstand eines Mediums in einem Volumen, beispielsweise einem Reservoir, zu ermitteln.

Sämtliche im Hinblick auf die verschiedenen Aspekte erläuterten Merkmale sind einzeln oder in (Sub-)Kombination mit anderen Aspekten kombinierbar.

Die Offenbarung sowie weitere vorteilhafte Ausführungsformen und Weiterbildungen derselben werden im Folgenden anhand der in den Zeichnungen dargestellten Beispiele näher beschrieben und erläutert. Es zeigen:
- Fig. 1 eine vereinfachte schematische Darstellung einer Hornantenne mit einer Füllung gemäß einer Ausführungsform,
- Fig. 2 eine vereinfachte schematische Darstellung eines Verfahrens zum Herstellen einer Füllung für eine Hornantenne gemäß einer Ausführungsform,
- Fig. 3 eine vereinfachte schematische Darstellung einer Hornantenne mit einer Füllung gemäß einer weiteren Ausführungsform,
- Fig. 4 ein vergrößerter Ausschnitt I aus der Ausführungsform nach Fig. 1, und
- Fig. 5 ein vergrößerter Ausschnitt II aus der Ausführungsform nach Fig. 1.

Die nachstehende detaillierte Beschreibung in Verbindung mit den beigefügten Zeichnungen, in denen gleiche Ziffern auf gleiche Elemente verweisen, ist als Beschreibung verschiedener Ausführungsformen des offengelegten Gegenstands gedacht und soll nicht die einzigen Ausführungsformen darstellen. Jede in dieser Offenbarung beschriebene Ausführungsform dient lediglich als Beispiel oder Illustration und sollte nicht als bevorzugt oder vorteilhaft gegenüber anderen Ausführungsformen ausgelegt werden. Die hierin enthaltenen illustrativen Beispiele erheben keinen Anspruch auf Vollständigkeit und limitieren den beanspruchten Gegenstand nicht auf die genauen offengelegten Formen. Verschiedene Abwandlungen der beschriebenen Ausführungsformen sind für den Fachmann ohne weiteres erkennbar, und die hierin definierten allgemeinen Grundsätze können auf andere Ausführungsformen und Anwendungen angewandt werden, ohne vom Geist und Umfang der beschriebenen Ausführungsformen abzuweichen. Daher sind die beschriebenen Ausführungsformen nicht auf die gezeigten Ausführungsformen limitiert, sondern haben den größtmöglichen Anwendungsbereich, der mit den hier offengelegten Grundsätzen und Merkmalen vereinbar ist.

Alle nachstehend in Bezug auf die Ausführungsbeispiele und/oder die begleitenden Figuren offengelegten Merkmale können allein oder in einer beliebigen Unterkombination mit Merkmalen der Aspekte der Offenbarung, einschließlich Merkmalen bevorzugter Ausführungsformen, kombiniert werden, vorausgesetzt, die sich ergebende Merkmalskombination ist für einen Fachmann auf dem Gebiet der Technik sinnvoll.

Für die Zwecke der Offenbarung bedeutet die Formulierung "mindestens eines von A, B und C" beispielsweise (A), (B), (C), (A und B), (A und C), (B und C) oder (A, B und C), einschließlich aller weiteren möglichen Kombinationen, wenn mehr als drei Elemente aufgeführt sind. Mit anderen Worten, der Begriff "mindestens eines von A und B" bedeutet im Allgemeinen "A und/oder B", nämlich "A" allein, "B" allein oder "A und B".

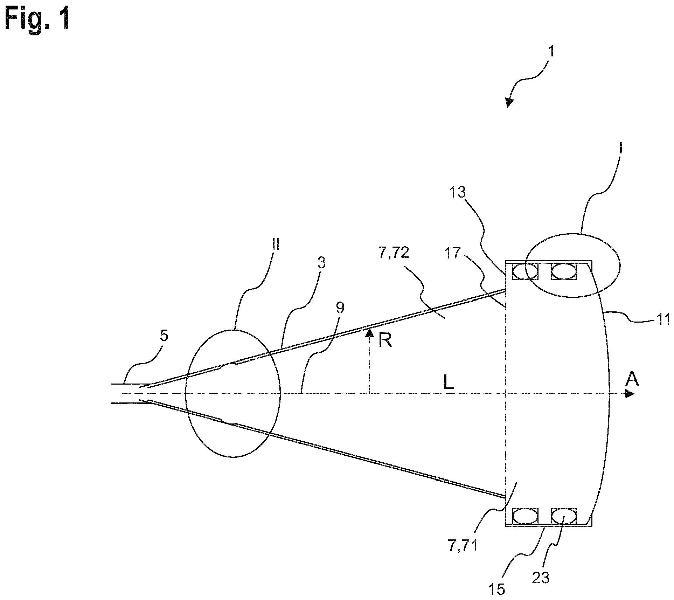

Fig. 1 zeigt eine vereinfachte schematische Darstellung einer Hornantenne 1 mit einer Füllung 7 gemäß einer Ausführungsform.

Die Hornantenne 1 weist ein im Wesentlichen trichterförmig ausgebildetes Antennenhorn 3 auf. An dem Antennenhorn 3 ist rückseitig eine Speiseeinrichtung 5 angeordnet. Die Speiseeinrichtung 5 kann beispielsweise ein mit dem Antennenhorn 3 verbundener Hohlleiter oder ein am Ende des Antennenhorns 3 angeordneter Flächenstrahler sein, beispielsweise ein sogenanntes Patchelement.

Die vorderseitige Richtung, die einer Hauptabstrahlrichtung A des Antennenhorns 5 entspricht, umfasst ein Ende, das dem Ende, an dem die Speiseeinrichtung 5 angeordnet ist, gegenüberliegt. Dadurch ist eine Längserstreckungsrichtung L des Antennenhorns 3 definiert. An dem vorderseitigen Ende weist das Antennenhorn 3 einen sich in Radialrichtung R, das bedeutet, senkrecht zur Längserstreckungsrichtung L des Antennenhorns 3, erstreckenden, umlaufenden Auflagerand 13 auf. Der Auflagerand 13 ist am Antennenhorn 3 angeformt. Das bedeutet, dass auch die Füllung 7 den Auflagerand 13 aufweist. Der Auflagerand 13 setzt sich in einem radial verlaufenden Abschnitt als ein in Hauptabstrahlrichtung A verlaufender, Kragen 15 fort, da das Antennenhorn gemäß dieser Ausführungsform radialsymmetrisch ausgebildet ist.

Im vorliegenden Ausführungsbeispiel sind das Antennenhorn 3, der umlaufende Auflagerand 13 sowie der Kragen 15 einstückig aus einem metallischen Werkstoff ausgebildet.

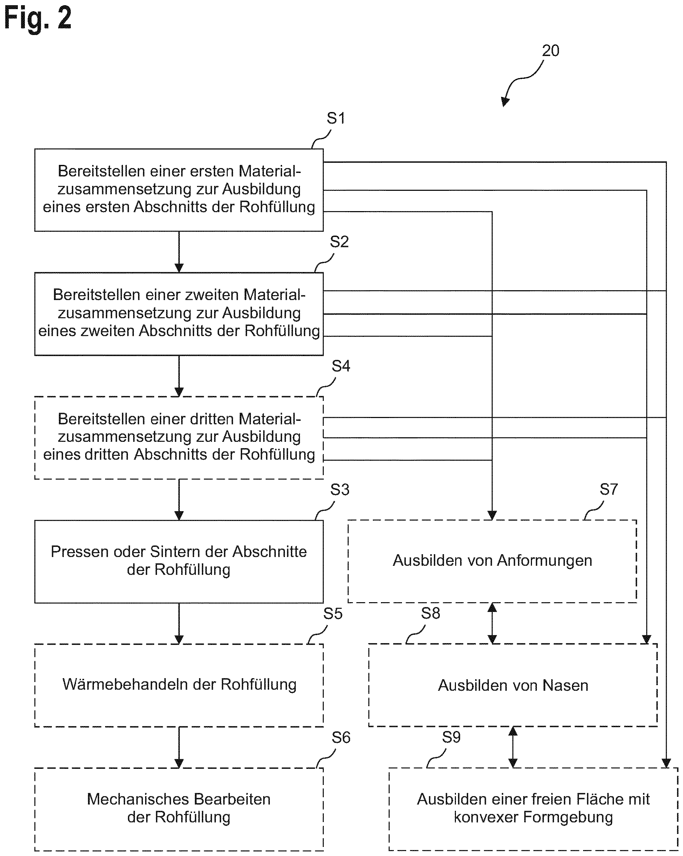

Die Hornantenne 1 ist mit einer Füllung 7 gefüllt. Die Füllung 7 weist in diesem Ausführungsbeispiel einen ersten Abschnitt 71 und einen zweiten Abschnitt 72 auf, die durch eine (fiktive) Grenzfläche 17 getrennt sind. Die Grenzfläche 17 stellt hier lediglich die Grenze zwischen den Abschnitten 71, 72 innerhalb der Füllung 7 dar. Die Füllung 7 ist einstückig ausgebildet und nach dem Verfahren aus Fig. 2 hergestellt. Der erste Abschnitt 71 und der zweite Abschnitt 72 sind gemäß der Ausführungsform aus Fig. 1 entlang der Längserstreckungsrichtung L nebeneinander angeordnet.

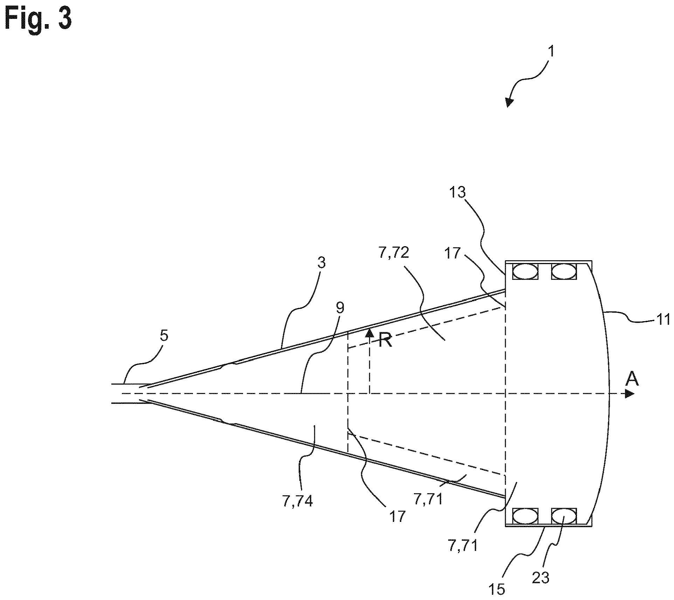

Generell können der erste Abschnitt 71 und der zweite Abschnitt 72 aber auch entlang der Radialrichtung R nebeneinander angeordnet sei, was beispielhaft in der Ausführungsform in Fig. 3 dargestellt ist. Auch Kombinationen davon sind denkbar.

Der erste Abschnitt 71 wird vorliegend aus einer ersten Materialzusammensetzung ausgebildet, die lediglich ein erstes Material aufweist. Die Materialkonzentration des ersten Materials innerhalb des ersten Abschnitts 71 ist dabei derart, dass andere Materialien darin zu vernachlässigen sind, oder sogar nicht nachweisbar sind. Die Materialkonzentration anderer Materialien innerhalb des zweiten Abschnitts 71 ist derart, dass diese darin zu vernachlässigen sind, oder sogar nicht nachweisbar sind.

Der erste Abschnitt 71 schließt die Hornantenne 1 in Hauptabstrahlrichtung A vorderseitig ab und stützt sich rückseitig an dem umlaufenden Auflagerand 13 ab. Der erste Abschnitt 71 ist dabei so ausgebildet, dass er einen umlaufend durch den Kragen 15 begrenzten Raum in Radialrichtung R (annähernd) vollständig ausfüllt, wobei zwischen dem ersten Abschnitt 71 und dem umlaufenden Kragen 15 eine umlaufende Abdichtung vorgesehen ist

Der erste Abschnitt 71 weist zu diesem Zweck im vorliegenden Ausführungsbeispiel zwei in Umfangsrichtung verlaufende Nuten auf, in denen Dichtelemente 23 angeordnet sind. Die Dichtelements 23 sind hier als O-Ringe ausgebildet. Die Dichtelemente 23 dichten damit den ersten Abschnitt 71 zu dem Kragen 15 hin ab, so dass ein Umgebungsmedium nicht in den Innenraum der Hornantenne 1 eindringen kann.

Der erste Abschnitt 71 ist im vorliegenden Ausführungsbeispiel mit einer in Hauptabstrahlrichtung A vorne liegenden freien Fläche 11 mit konvexer Oberflächenform ausgebildet. Bei diesem Ausführungsbeispiel weist die freie Fläche 11 eine linsenförmige Ausgestaltung auf. Es sind sphärische und asphärische Ausgestaltungen, beispielsweise mit parabelförmigem Verlauf oder kegelförmige Ausgestaltungen der freien Fläche 11 denkbar.

Rückseitig des ersten Abschnitts 71 ist im Ausführungsbeispiel aus Fig. 1 der zweite Abschnitt 72 der Füllung 7 aus einer anderen Materialzusammensetzung angeordnet.

In diesem Ausführungsbeispiel ist der erste Abschnitt 71 aus PEEK ausgebildet, das insofern die erste Materialzusammensetzung ausbildet, die dadurch nur ein einzelnes Material aufweist. PEEK ist ein Hochleistungskunststoff mit hoher mechanischer, thermischer und chemischer Stabilität. Auf diese Weise kann die vorliegende Hornantenne 1 in Über- und Unterdruck beaufschlagten Umgebungen mit chemisch aggressiven Medien und hohen Temperaturschwankungen eingesetzt werden.

Als weitere Materialien für den ersten Abschnitt 71 kommen beispielsweise Keramik- Polyvinylideenfluorid 30 (PVDF) oder Polyphenylensulfid (PPS) in Frage. In Frage kommen ferner weitere Hochleistungskunststoffe sowie faserverstärkte Kunststoffe, die besonders hohe mechanische Belastungen aufnehmen können.

Rückseitig zu dem ersten Abschnitt 71 ist im vorliegenden Ausführungsbeispiel unmittelbar der zweite Abschnitt 72 aus einem zweiten Material, vorliegend PTFE ausgebildet, das insofern die zweite Materialzusammensetzung ausbildet. PTFE hat im Vergleich zu PEEK deutliche bessere HF-Eigenschaften (HochfrequenzEigenschaften) und kann daher vorteilhaft in einem Hohlraum 9 des Antennenhorns 3 eingesetzt werden.

Der zweite Abschnitt 72 kann in anderen Ausführungsformen beispielsweise aus PTFE, Polypropylen (PP), Polyethylen (PE) oder anderen Kunststoffen mit geeigneten Hochfrequenzeigenschaften gefertigt sein.

Der zweite Abschnitt 72 füllt den Hohlraum 9 des Antennenhorns 3 aus und reicht bis zu einem Ansatz des als Speiseeinrichtung 5 an der Hornantenne 1 angeordneten Hohlleiters.

Fig. 3 zeigt eine vereinfachte schematische Darstellung einer Hornantenne 1 mit einer Füllung 7 gemäß einer weiteren Ausführungsform. Es wird hier nur auf die Unterschiede zu der Ausführungsform aus Fig. 1 eingegangen.

Die Füllung 7 weist gemäß dieser Ausführungsform einen dritten Abschnitt 74 auf. Der dritte Abschnitt 74 ist aus einer dritten Materialzusammensetzung ausgebildet. Die dritte Materialzusammensetzung unterscheidet sich von der ersten und der zweiten Materialzusammensetzung.

Generell kann der dritte Abschnitt 74 aber auch zumindest teilweise aus einem Material gebildet sein, dass auch für den ersten Abschnitt 71 oder den zweiten Abschnitt 72 genutzt wird.

Zusätzlich setzt sich der erste Abschnitt 71 gemäß dieser Ausführungsform entlang der Längserstreckungsrichtung L fort und umschließt den zweiten Abschnitt 72 in radialer Richtung R. Der erste Abschnitt 71 ist also als Zylindermantel relativ zum zweiten Abschnitt 72 ausgebildet. Andere Formgebungen sind ebenfalls denkbar.

Die Grenzfläche 17 zwischen dem dritten Abschnitt 74 und dem ersten Abschnitt 71 und dem zweiten Abschnitt 72 ist wieder nur zur Illustration dargestellt. Die Füllung 7 ist einstückig.

Optional kann die Füllung 7 auch mehr Abschnitte aufweisen, beispielsweise um sanfte Materialübergänge im Sinne von sich allmählich ändernden Materialkonzentrationen zwischen verschiedenen Abschnitten zu gewährleisten.

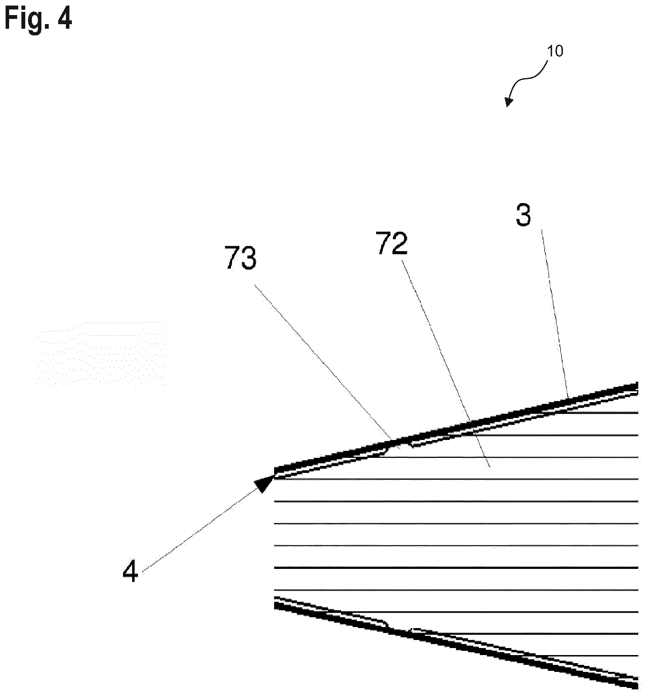

Fig. 4 zeigt den vergrößerter Ausschnitt II aus der Ausführungsform nach Fig. 1.

Der vergrößerte Ausschnitt II zeigt, dass an dem Kragen 15 in Hauptabstrahlrichtung A vorderseitig eine in Radialrichtung R nach innen springende Nase 16 einstückig angeformt ist. Durch die Nase 16 wird eine Klemmwirkung auf den ersten Abschnitt 71 der Füllung 7 ausgeübt und dieser an einer Bewegung aus dem Antennenhorn 3 heraus gehindert. Die Füllung 7 bestehend aus dem ersten Abschnitt 71 und dem zweiten Abschnitt 72 ist damit in dem Antennenhorn 3 fixiert. Als Folge kann sie auf einfache Weise, beispielsweise über eine Schnappverbindung, alternativ über eine Bajonettverbindung oder dergleichen, in dem Antennenhorn 3 befestigt sein.

Hier ist die Nase 16 als umlaufender Steg ausgebildet. Alternativ kann sie auch als über den Umfang verteilte, bevorzugt in regelmäßigen Abständen angeordnete einzelne Nasen ausgebildet sein. Die Nasen 16 können einstückig mit dem Kragen 15 ausgebildet oder mit diesem lösbar oder unlösbar verbunden sein. Beispielsweise könnte ein umlaufender Schnappring vorderseitig auf den Kragen 15 aufgesteckt und die Füllung 7 damit in dem Antennenhorn 3 fixiert werden.

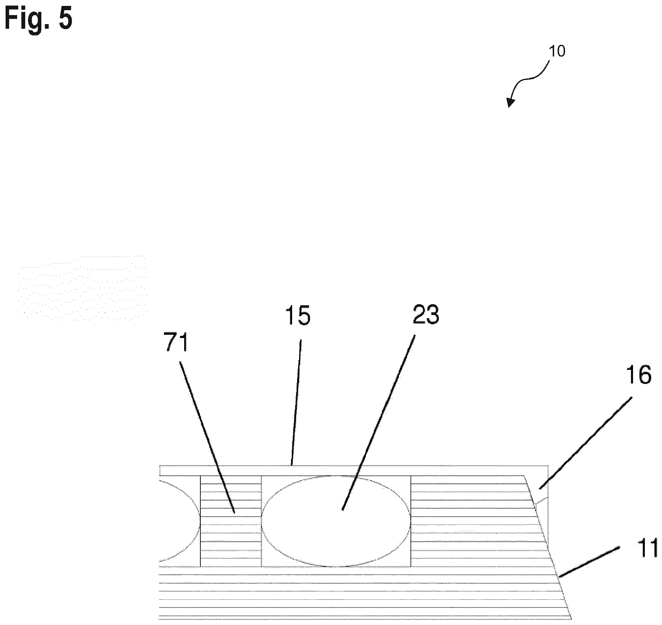

Fig. 5 zeigt den vergrößerter Ausschnitt I aus der Ausführungsform nach Fig. 1.

Der vergrößerte Ausschnitt I zeigt, dass zwischen dem Antennenhorn 3 und der Füllung 7, vorliegend dem zweiten Abschnitt 72 der Füllung 7, ein Luftspalt 4 verbleibt. Dieser Luftspalt ist aus hochfrequenztechnischer Sicht vorteilhaft und ermöglicht außerdem, dass thermisch induzierte Ausdehnungen der Füllung 7 in Radialrichtung möglich sind. Dazu weist die Füllung 7 im zweiten Abschnitt 72 vorgesehene Anformungen 73 auf, durch die ein definierter Abstand zwischen der Füllung 7 und dem Antennenhorn 3 eingestellt wird. Diese Anformung stellt auch sicher, dass die Füllung 72 immer zentriert im Antennenhorn 3 montiert ist.

Alternativ zu Anformungen 73 könnte beispielsweise auch ein O-Ring oder dergleichen zwischen dem Antennenhorn 3 und der Füllung 7 zur Einstellung des Abstands vorgesehen sein.

Fig. 2 zeigt eine vereinfachte schematische Darstellung eines Verfahrens 20 zum Herstellen einer Füllung 7 für eine Hornantenne 1 gemäß einer Ausführungsform. Optionale Schritte sind gestrichelt dargestellt.

Im Schritt S1 wird zumindest die erste Materialzusammensetzung zur Ausbildung des ersten Abschnitts 71 einer Rohfüllung bereitgestellt. Insbesondere wird die erste Materialzusammensetzung in Pulverform bereitgestellt. Dadurch ist die Dosierung einfach.

Im nachfolgenden Schritt S2 wird zumindest die zweite Materialzusammensetzung zur Ausbildung zumindest des zweiten Abschnitts 72 der Rohfüllung bereitgestellt. Der zweite Abschnitt 72 unterscheidet sich von dem ersten Abschnitt 71, beispielsweise im Hinblick auf die Materialien und die Form. Insbesondere wird die zweite Materialzusammensetzung in Pulverform bereitgestellt.

Durch die Pulverform ist die Dosierung einfach.

Im nachfolgenden optionalen Schritt S4 wird eine Materialzusammensetzung, beispielsweise die erste Materialzusammensetzung, die zweite Materialzusammensetzung oder eine dritte Materialzusammensetzung, bereitgestellt, um einen dritten Abschnitt 74 der Rohfüllung auszubilden. Der dritte Abschnitt 74 unterscheidet sich von dem ersten Abschnitt 71 und dem zweiten Abschnitt 72, beispielsweise im Hinblick auf die Materialien, die Form und die Position.

In einer Alternative können die Abschnitte 71, 72, 74 auch durch einzelne Materialien ausgebildet werden.

Im anschließenden Schritt S3 werden die Abschnitte 71, 72 (und optional 74) der Rohfüllung gepresst oder gesintert. Dadurch wird gewährleistet, dass die Rohfüllung einstückig ist und die Form, Zusammensatzung und Position der Abschnitte permanent ist.

Optional kann das Verfahren 20 weitergebildet werden, um strukturelle Merkmale auszubilden.

Beispielsweise können die Schritte S1, S2, S4 dahingehend ausgebildet werden, dass gemäß dem optionalen Schritt S7 zumindest eine Anformung in einem Abschnitt 71, 72, 74 ausgebildet wird. Dadurch kann beispielsweise eine umlaufende Anformung 73 gewährleistet werden, die zur Zentrierung der Füllung 7 innerhalb des Antennenhorns 3 und zur Ausbildung des Luftspalt 4 genutzt werden kann.

Alternativ oder kumulativ können gemäß dem Schritt S8 auch Nasen 16, beispielsweise Klemmnasen ausgebildet werden, die zur Fixierung der Füllung 7 innerhalb des Antennenhorns 3 genutzt werden können.

Alternativ oder kumulativ kann gemäß dem Schritt S9 auch eine freie Fläche 11 in zumindest einem der Abschnitte 71, 72, 74 ausgebildet werden, die eine besondere Formgebung aufweist, beispielsweise eine konvexe Formgebung. So kann die Abstrahlcharakteristik wie gewünscht definiert werden.

Zusätzlich kann das Verfahren 20 auch durch den optionalen Schritt S5 weitergebildet werden, in dem die Rohfüllung wärmebehandelt wird. Das bedeutet, dass die Rohfüllung erhitzt wird. Dies kann optional auch gleichzeitig mit dem Schritt S3 erfolgen, also während des Press- oder Sinterprozesses. Dadurch kann die Ausbildung der Füllung 7 mit der gewünschten Formgebung unterstützt werden.

Optional kann das Verfahren 20 auch durch den Schritt S6 weitergebildet werden, in dem die Rohfüllung mechanisch bearbeitet oder behandelt wird, damit die Füllung 7 der Hornantenne 1 erhalten wird. Beispielsweise können durch die mechanische Bearbeitung gewünschte Anformungen 73 nachbearbeitet oder ausgebildet werden, damit sie wie gewünschte Formgebungen aufweisen.

In dieser Offenbarung kann auf Mengen und Zahlen Bezug genommen werden. Sofern nicht ausdrücklich angegeben, sind solche Mengen und Zahlen nicht als limitierend zu betrachten, sondern als Beispiele für die möglichen Mengen oder Zahlen im Zusammenhang mit der Offenbarung. In diesem Zusammenhang kann in der Offenbarung auch der Begriff "Mehrzahl" verwendet werden, um auf eine Menge oder Zahl zu verweisen. In diesem Zusammenhang ist mit dem Begriff "Mehrzahl" jede Zahl gemeint, die größer als eins ist, z. B. zwei, drei, vier, fünf, usw. Die Begriffe "etwa", "ungefähr", "nahe" usw. bedeuten plus oder minus 5 % des angegebenen Wertes.

Obwohl die Offenbarung in Bezug auf eine oder mehrere Ausführungsformen dargestellt und beschrieben wurde, wird der Fachmann nach dem Lesen und Verstehen dieser Beschreibung und der beigefügten Zeichnungen gleichwertige Änderungen und Modifikationen vornehmen können.
- 1: Hornantenne
- 3: Antennenhorn
- 4: Luftspalt
- 5: Speiseeinrichtung
- 7: Füllung
- 9: Hohlraum
- 11: freie Fläche
- 13: umlaufender Auflagerand
- 13: Auflagerand
- 15: umlaufenden Kragen
- 15: Kragen
- 16: Nase
- 17: Grenzfläche
- 20: Verfahren[s]
- 23: Dichtelemente
- 71: erster Abschnitt
- 72: zweiter Abschnitt
- 73: umlaufende Anformung
- 74: dritte[n] Abschnitt
- L: Längserstreckungsrichtung
- R: Radialrichtung
- S1-S9: Verfahrensschritte

## Patentansprüche

1. Verfahren (20) zum Herstellen einer Füllung (7) für eine Hornantenne (1) für ein Radarmessgerät, wobei die Füllung (7) zumindest eine erste Materialzusammensetzung und eine von der ersten Materialzusammensetzung unterschiedliche zweite Materialzusammensetzung aufweist, wobei das Verfahren (20) zumindest die Schritte umfasst:
- Bereitstellen zumindest der ersten Materialzusammensetzung zur Ausbildung eines ersten Abschnitts (71) einer Rohfüllung,
- Bereitstellen zumindest der zweiten Materialzusammensetzung zur Ausbildung zumindest eines zweiten Abschnitts (72) der Rohfüllung, der sich von dem ersten Abschnitt (71) unterscheidet, und
- Pressen oder Sintern der Abschnitte (71, 72) der Rohfüllung.

2. Verfahren (20) zum Herstellen einer Füllung (7) für eine Hornantenne (1) nach Anspruch 1, **dadurch gekennzeichnet, dass** das Verfahren (20) zusätzlich umfasst:
- Wärmebehandeln der Rohfüllung.

3. Verfahren (20) zum Herstellen einer Füllung (7) für eine Hornantenne (1) nach Anspruch 1 oder 2, **dadurch gekennzeichnet, dass** eine Materialkonzentration eines ersten Materials im ersten Abschnitt (71) größer als ein vorbestimmter erster Schwellenwert ist, und/oder dass eine Materialkonzentration eines zweiten Materials im zweiten Abschnitt (72) größer als ein vorbestimmter zweiter Schwellenwert ist.

4. Verfahren (20) zum Herstellen einer Füllung für eine Hornantenne (1) nach einem der vorherigen Ansprüche, **dadurch gekennzeichnet, dass** das Verfahren (20) zusätzlich umfasst:
- Mechanisches Bearbeiten der Rohfüllung, um die Füllung (7) der Hornantenne (1) zu erhalten.

5. Verfahren (20) zum Herstellen einer Füllung (7) für eine Hornantenne (1) nach einem der vorherigen Ansprüche, **dadurch gekennzeichnet, dass** die Rohfüllung einstückig ist.

6. Verfahren (20) zum Herstellen einer Füllung (7) für eine Hornantenne (1) nach einem der vorherigen Ansprüche, **dadurch gekennzeichnet, dass** ein Übergang einer lokalen Materialzusammensetzung zwischen dem ersten Abschnitt (71) und dem zweiten Abschnitt (72) fließend ist.

7. Verfahren (20) zum Herstellen einer Füllung (7) für eine Hornantenne (1) nach einem der vorherigen Ansprüche, **dadurch gekennzeichnet, dass** das Verfahren (20) zusätzlich umfasst:
- Bereitstellen zumindest der ersten Materialzusammensetzung und/oder der zweiten Materialzusammensetzung und/oder einer dritten Materialzusammensetzung, die sich von der ersten Materialzusammensetzung und der zweiten Materialzusammensetzung unterscheidet, zur Ausbildung eines dritten Abschnitts (74) der Rohfüllung.

8. Verfahren (20) zum Herstellen einer Füllung (7) für eine Hornantenne (1) nach Anspruch 7, **dadurch gekennzeichnet, dass** Übergange einer lokalen Materialzusammensetzung zwischen dem ersten Abschnitt (71), dem zweiten Abschnitt (72) und dem dritten Abschnitt (74) fließend sind.

9. Verfahren (20) zum Herstellen einer Füllung (7) für eine Hornantenne (1) nach einem der vorherigen Ansprüche, **dadurch gekennzeichnet, dass** die erste Materialzusammensetzung und oder die zweite Materialzusammensetzung zumindest zwei verschiedene von Polytetrafluorethylen, Polyetheretherketon, Polyetheretherketon CF 25 und Polyetheretherketon CF 30 umfassen.

10. Verfahren (20) zum Herstellen einer Füllung (7) für eine Hornantenne (1) nach einem der vorherigen Ansprüche, **dadurch gekennzeichnet, dass** der erste Abschnitt (71) in Hauptabstrahlrichtung eine freie Fläche (11) mit konvexer Formgebung aufweist.

11. Verfahren (20) zum Herstellen einer Füllung (7) für eine Hornantenne (1) nach einem der vorherigen Ansprüche, **dadurch gekennzeichnet, dass** der erste Abschnitt (71) linsenförmig oder kegelförmig ausgebildet ist.

12. Hornantenne (1) für ein Radarmessgerät, die eine Füllung (7) aufweist, die nach dem Verfahren (20) nach einem der vorherigen Ansprüche hergestellt ist, und wobei der erste Abschnitt (71) und der zweite Abschnitt (72) entlang der Längserstreckungsrichtung (L) und/oder entlang der Radialrichtung (R) der Hornantenne (1) ausgebildet sind.

13. Hornantenne (1) nach Anspruch 12, **dadurch gekennzeichnet, dass** die Hornantenne (1) ein in einer vorderseitigen Richtung strahlendes Antennenhorn (3) und eine rückseitige Speiseeinrichtung (5) aufweist, wobei die Füllung (7) die Hornantenne (1) wenigstens teilweise ausfüllt und vorderseitig verschließt.

14. Hornantenne (1) nach Anspruch 13, **dadurch gekennzeichnet, dass** die Füllung (7) das Antennenhorn (3) der Hornantenne (1) senkrecht zu einer Hauptabstrahlrichtung in Radialrichtung (R) der Hornantenne (1) wenigstens abschnittsweise vollständig ausfüllt.

15. Radarmessgerät mit einer Elektronik zur Erzeugung und Auswertung hochfrequenter Signale, einer Speiseeinrichtung (5) zur Speisung einer Hornantenne (1) mit den hochfrequenten Signalen, **gekennzeichnet durch** eine Hornantenne (1) gemäß einem der Ansprüche 12 bis 14.

## Geänderte Patentansprüche

### Geänderte Patentansprüche gemäss Regel 137(2) EPÜ.

1. Verfahren (20) zum Herstellen einer Füllung (7) für eine Hornantenne (1) für ein Radarmessgerät, wobei die Füllung (7) zumindest eine erste Materialzusammensetzung und eine von der ersten Materialzusammensetzung unterschiedliche zweite Materialzusammensetzung aufweist, wobei das Verfahren (20) zumindest die Schritte umfasst:
- Bereitstellen zumindest der ersten Materialzusammensetzung zur Ausbildung eines ersten Abschnitts (71) einer Rohfüllung,
- Bereitstellen zumindest der zweiten Materialzusammensetzung zur Ausbildung zumindest eines zweiten Abschnitts (72) der Rohfüllung, der sich von dem ersten Abschnitt (71) unterscheidet, und
- Pressen oder Sintern der Abschnitte (71, 72) der Rohfüllung, und
wobei die Rohfüllung einstückig ist.

2. Verfahren (20) zum Herstellen einer Füllung (7) für eine Hornantenne (1) nach Anspruch 1, **dadurch gekennzeichnet, dass** das Verfahren (20) zusätzlich umfasst:
- Wärmebehandeln der Rohfüllung.

3. Verfahren (20) zum Herstellen einer Füllung (7) für eine Hornantenne (1) nach Anspruch 1 oder 2, **dadurch gekennzeichnet, dass** eine Materialkonzentration eines ersten Materials im ersten Abschnitt (71) größer als ein vorbestimmter erster Schwellenwert ist, und/oder dass eine Materialkonzentration eines zweiten Materials im zweiten Abschnitt (72) größer als ein vorbestimmter zweiter Schwellenwert ist.

4. Verfahren (20) zum Herstellen einer Füllung für eine Hornantenne (1) nach einem der vorherigen Ansprüche, **dadurch gekennzeichnet, dass** das Verfahren (20) zusätzlich umfasst:
- Mechanisches Bearbeiten der Rohfüllung, um die Füllung (7) der Hornantenne (1) zu erhalten.

5. Verfahren (20) zum Herstellen einer Füllung (7) für eine Hornantenne (1) nach einem der vorherigen Ansprüche, **dadurch gekennzeichnet, dass** ein Übergang einer lokalen Materialzusammensetzung zwischen dem ersten Abschnitt (71) und dem zweiten Abschnitt (72) fließend ist.

6. Verfahren (20) zum Herstellen einer Füllung (7) für eine Hornantenne (1) nach einem der vorherigen Ansprüche, **dadurch gekennzeichnet, dass** das Verfahren (20) zusätzlich umfasst:
- Bereitstellen zumindest der ersten Materialzusammensetzung und/oder der zweiten Materialzusammensetzung und/oder einer dritten Materialzusammensetzung, die sich von der ersten Materialzusammensetzung und der zweiten Materialzusammensetzung unterscheidet, zur Ausbildung eines dritten Abschnitts (74) der Rohfüllung.

7. Verfahren (20) zum Herstellen einer Füllung (7) für eine Hornantenne (1) nach Anspruch 8, **dadurch gekennzeichnet, dass** Übergange einer lokalen Materialzusammensetzung zwischen dem ersten Abschnitt (71), dem zweiten Abschnitt (72) und dem dritten Abschnitt (74) fließend sind.

8. Verfahren (20) zum Herstellen einer Füllung (7) für eine Hornantenne (1) nach einem der vorherigen Ansprüche, **dadurch gekennzeichnet, dass** die erste Materialzusammensetzung und oder die zweite Materialzusammensetzung zumindest zwei verschiedene von Polytetrafluorethylen, Polyetheretherketon, Polyetheretherketon CF 25 und Polyetheretherketon CF 30 umfassen.

9. Verfahren (20) zum Herstellen einer Füllung (7) für eine Hornantenne (1) nach einem der vorherigen Ansprüche, **dadurch gekennzeichnet, dass** der erste Abschnitt (71) in Hauptabstrahlrichtung eine freie Fläche (11) mit konvexer Formgebung aufweist.

10. Verfahren (20) zum Herstellen einer Füllung (7) für eine Hornantenne (1) nach einem der vorherigen Ansprüche, **dadurch gekennzeichnet, dass** der erste Abschnitt (71) linsenförmig oder kegelförmig ausgebildet ist.

11. Hornantenne (1) für ein Radarmessgerät, die eine Füllung (7) aufweist, die nach dem Verfahren (20) nach einem der vorherigen Ansprüche hergestellt ist, und wobei der erste Abschnitt (71) und der zweite Abschnitt (72) entlang der Längserstreckungsrichtung (L) und/oder entlang der Radialrichtung (R) der Hornantenne (1) ausgebildet sind, und
wobei die Rohfüllung einstückig ist.

12. Hornantenne (1) nach Anspruch 11, **dadurch gekennzeichnet, dass** die Hornantenne (1) ein in einer vorderseitigen Richtung strahlendes Antennenhorn (3) und eine rückseitige Speiseeinrichtung (5) aufweist, wobei die Füllung (7) die Hornantenne (1) wenigstens teilweise ausfüllt und vorderseitig verschließt.

13. Hornantenne (1) nach Anspruch 12, **dadurch gekennzeichnet, dass** die Füllung (7) das Antennenhorn (3) der Hornantenne (1) senkrecht zu einer Hauptabstrahlrichtung in Radialrichtung (R) der Hornantenne (1) wenigstens abschnittsweise vollständig ausfüllt.

14. Radarmessgerät mit einer Elektronik zur Erzeugung und Auswertung hochfrequenter Signale, einer Speiseeinrichtung (5) zur Speisung einer Hornantenne (1) mit den hochfrequenten Signalen, **gekennzeichnet durch** eine Hornantenne (1) gemäß einem der Ansprüche 11 bis 13.
